# EUROPEAN PATENT SPECIFICATION

(11) **EP 3 761 278 B1**
(45) Date of publication and mention of the grant of the patent: **02.07.2025**
(21) Application number: 19756946.0
(22) Date of filing: 31.01.2019
(51) Int. Cl.: G07F 11/00, G07F 11/06, G06K 17/00, G07C 9/00, G06Q 20/20, G07F 9/02

(54) **SELF-SERVICE VENDING DEVICE AND VENDING METHOD THEREOF, AND SELF-SERVICE VENDING SYSTEM**
SELBSTBEDIENUNGSVERKAUFSAUTOMAT UND VERKAUFSVERFAHREN DAFÜR SOWIE SELBSTBEDIENUNGSVERKAUFSSYSTEM
DISTRIBUTEUR AUTOMATIQUE EN LIBRE-SERVICE ET SON PROCÉDÉ DE DISTRIBUTION AUTOMATIQUE, ET SYSTÈME DE DISTRIBUTION AUTOMATIQUE EN LIBRE-SERVICE

(30) Priority: 26.02.2018 CN 201810159568; 26.02.2018 CN 201820272408 U
(43) Date of publication of application: 06.01.2021
(73) Proprietor: Hefei Midea Intelligent Technologies Co., Ltd., Hefei, Anhui 230601 (CN); Hefei Hualing Co., Ltd., Hefei, Anhui 230601 (CN)
(72) Inventor: JI, Tao, Hefei, Anhui 230601 (CN); DAI, Jiang, Hefei, Anhui 230601 (CN); ZHANG, Jielong, Hefei, Anhui 230601 (CN); LV, Xiufeng, Hefei, Anhui 230601 (CN); LI, Yangyang, Hefei, Anhui 230601 (CN)
(74) Representative: Ran, Handong
(86) International application number: PCT/CN2019/074078
(87) International publication number: WO 2019/161734

(56) References cited:
- WO-A1-2006/123987
- WO-A1-2017/150590
- AU-A1- 2011 338 299
- CN-A- 105 931 371
- CN-A- 106 781 014
- CN-A- 106 920 152
- CN-A- 107 093 284
- CN-A- 107 657 736
- CN-A- 108 346 221
- CN-U- 206 546 607
- CN-U- 208 027 468
- JP-A- 2004 139 194
- US-A1- 2009 222 359
- US-A1- 2011 301 749
- US-A1- 2013 284 806
- US-A1- 2014 297 487
- US-A1- 2015 039 458
- US-B1- 7 780 081

## Description

This application claims priority to and benefits of Chinese Patent Application No. 201810159568.6 and Chinese Patent Application No. 201820272408.8, both filed on February 26, 2018.

### FIELD

The present disclosure relates to the field of intelligent device technology, and more particularly to a self-service vending device, a vending method for a self-service vending device, and a self-service vending system.

### BACKGROUND

At present, for a self-service vending device, an RFID (Radio Frequency Identification) electronic tag needs to be attached to each of goods, a reader and an antenna are mounted in a cabinet, and through the reader, the RFID tag on the goods in the cabinet is read, the goods in the cabinet before and after the door is closed are acquired, and then the goods taken out by a user is confirmed. For example, in some related techniques, a self-service vending method and a self-service vending machine are disclosed, but hardware and a flow processing method are not involved. In some related techniques, a transmitter and an infrared receiver are mounted above and below a shelf, respectively, and whether there are goods on the current shelf is judged through infrared induction, but the RFID electronic tag still needs to be attached to each of goods. However, the RFID tag is high in cost at present, and a method to identify goods by reading the RFID tag is not easy to popularize.

US 2009/222359 A1 describes systems and methods for stock monitoring.

US 2014/297487 A1 describes systems and methods relating to managing an inventory of items within a storage container.

US 2013/284806 A1 describes an automated purchasing system that utilizes wireless purchaser identifier weight sensing shelves that wirelessly communicate with a store server.

CN 106 781 014 A describes a vending machine and an operation method thereof.

WO 2006/123987 A1 describes a storage cabinet for at least one of refrigerated and frozen goods for sale wherein the cabinet door opens via entering of a door opening code in a payment terminal with scanning equipment for reading of codes which identify said goods.

US 2015/039458 A1 describes a gestural checkout system which includes a sensor-equipped server programmed with a gestural context application that authenticates a customer's identity upon entry to a retail store.

WO 2017/150590 A1 describes an information processing system that, when a shopper purchases a product displayed in a shop, enables the automation of the purchase of the product and reduces the time required for purchasing the product.

US 7 780 081 B1 describes a system and method for security protection, inventory tracking and automated shopping cart checkout.

CN 107 657 736 A describes an open type vegetable, melon and fruit intelligent vending machine.

CN 108 346 221 A describes unmanned vending equipment and a vending method and unmanned vending system thereof.

CN 208 027 468 U describes a self -service store equipment and self -service store system.

CN 105 931 371 A describes a vending machine and a vending method, and relates to the field of automatic equipment.

CN 206 546 607 U describes an automatic vending machine and retail kiosk which belongs to the automation equipment field.

CN 106 920 152 A describes a self-service selling method and a self-service selling system.

CN 107 093 284 A describes an intelligent cabinet with comprehensive functions of fresh product purchasing, express delivery and table reservation and a realization method thereof.

JP 2004 139194 A describes an automatic accounting system which can prevent the interchanging of even commodities of individually different weight without indicating weight by weighing previously so that the weight can be read, and can correspond to the purchase of combined commodities selected by a customer and sales by weighing.

AU 2011 338 299 discloses a direct access dispensing system.

US 2011/301749 discloses a networked vendor for a workplace or a controlled environment.

### SUMMARY

Aspects of the present invention are defined by the accompanying claims. According to a first aspect there is provided a self-service vending device in accordance with claim 1. According to a second aspect there is provide a self-service system in accordance with claim 4. According to a third aspect there is provided a method in accordance with claim 5. According to a fourth aspect there is provided a non-transitory computer readable storage medium in accordance with claim 6.

Embodiments of the present disclosure seek to solve at least one of the problems existing inthe related art to at least some extent.

Accordingly, a first objective of the present disclosure is to provide a self-service vending device, which does not rely on a RFID electronic tag to identify vending information, and is low in cost.

A second objective of the present disclosure is to provide a self-service vending system.

A third objective of the present disclosure is to provide a vending method for a self-service vending device.

A fourth objective of the present disclosure is to provide a non-transitory computer readable storage medium.

In order to achieve the above objectives, embodiments of a first aspect of the present disclosure provide the self-service vending device. The device includes a device body, a door, at least one shelf mounted in the device body, a weighing module, and a main control module. The weighing module includes a micro-control unit and a weighing unit disposed corresponding to each shelf, the micro-control unit and the weighing unit disposed corresponding to each shelf are connected to each other, and the weighing unit is configured to acquire a weight of goods on the corresponding shelf. The main control module is connected to the micro-control unit corresponding to each shelf, and configured to obtain weight information of the goods on each shelf after vending, and to determine vending information according to a weight change of the goods on each shelf before and after vending.

In the self-service vending device according to embodiments of the present disclosure, each of the at least one shelf is provided with the micro-control unit and the weighing unit, the weight of the goods on each shelf is monitored by the micro-control unit corresponding to each shelf, the weight information of the goods on each shelf after vending is summarized by the main control module, and the vending information is determined according to the weight change of the goods on each shelf before and after vending, without relying on the RFID electronic tag. In addition, the self-service vending device according to embodiments of the present disclosure is low in cost and easy to popularize.

In some embodiments of the present disclosure, any of the at least one shelf is provided with at least one tray; the weighing unit corresponding to each shelf includes the same number of weighing sensors as that of the trays, and the weighing sensor is arranged corresponding to the tray and configured to acquire the weight of the goods on the tray.

In some embodiments of the present disclosure, the self-service vending device further includes an imaging apparatus. The imaging apparatus is connected to the main control module and configured to acquire image information when a user purchases goods, so that a purchasing behavior of the user may be monitored, and the device is safer and more reliable.

In some embodiments of the present disclosure, the self-service vending device further includes a communication module. The communication module is connected to the main control module and configured to upload the weight information of the goods on each shelf to a server.

In some embodiments of the present disclosure, the main control module or the server is further configured to determine a kind and a unit weight of the goods on the tray according to an identifier of the tray, and determine the vended number of the goods on the tray according to the weight change of the goods on the tray before and after vending and the unit weight of the goods on the tray.

In some embodiments of the present disclosure, the self-service vending device further includes an alarm module. The alarm module is connected to the main control module and configured to issue an alarm prompt when it is confirmed that a quotient of the weight change of the goods on the tray before and after vending and the unit weight of the goods on the tray is a non-integer. In this way, related personnel may be timely reminded of an abnormal condition that the goods may be misplaced or replaced.

In some embodiments of the present disclosure, the door includes at least one door unit, and the at least one door unit is arranged corresponding to the at least one shelf, which is more convenient and flexible.

In some embodiments of the present disclosure, the self-service vending device further includes a user information identification module. The user information identification module is connected to the main control module and configured to detect user identification input information.

In some embodiments of the present disclosure, the self-service vending device further includes a display module. The display module is connected to the main control module and configured to output one or more of unlocking identification information, the kind and the number of current goods, details of goods purchased by the user and deduction information, which is more visual.

In order to achieve the above objectives, embodiments of a second aspect of the present disclosure provide a self-service vending system. The self-service vending system includes the self-service vending device described above and a server. The server is configured to determine vending information according to a weight change of the goods on the shelf of the self-service vending device before and after vending.

According to the self-service vending system of embodiments of the present disclosure, based on the self-service vending device and the server, automatic goods identification and payment of the self-service vending device may be realized without relying on the RFID electronic tag, and the self-service vending system is low in cost and easy to popularize.

In order to achieve the above objectives, embodiments of a third aspect of the present disclosure provide a vending method for a self-service vending device. The self-service vending device includes a device body, a door, at least one shelf mounted in the device body, a weighing module, and a main control module. The weighing module includes a micro-control unit and a weighing unit corresponding to each shelf, and the main control module is connected to the micro-control unit corresponding to each shelf. The vending method includes: acquiring weight information of goods on each shelf after vending; calculating a weight change of the goods on each shelf before and after vending; and determining vending information according to the weight change of the goods on each shelf before and after vending.

According to the vending method for the self-service vending device of embodiments of the present disclosure, based on the weight detection of the micro-control unit and the weighing unit arranged corresponding to each of the at least one shelf, the weight of goods on each shelf is obtained, and the vending information is determined according to the weight change of the goods on each shelf before and after vending, without relying on the RFID electronic tag, the cost is low, and the method is simple and easy to popularize.

In some embodiments of the present disclosure, any of the at least one shelf is provided with at least one tray; the weighing unit corresponding to each shelf includes the same number of weighing sensors as that of the trays, and the weighing sensor is arranged corresponding to the tray and configured to acquire the weight of the goods on the tray.

In some embodiments of the present disclosure, determining vending information according to the weight change of the goods on each shelf before and after vending includes: determining a kind and a unit weight of the goods on the tray according to an identifier of the tray; and confirming that the weight change of the goods on the tray before and after vending is an integral multiple of the unit weight of the goods on the tray, and calculating the vended number of the goods on the tray according to the weight change and the unit weight.

In some embodiments of the present disclosure, determining vending information according to the weight change of the goods on each shelf before and after vending further includes: issuing an alarm prompt when it is confirmed that a quotient of the weight change of the goods on the tray before and after vending and the unit weight of the goods on the tray is a non-integer. In this way, related personnel may be timely reminded of an abnormal condition that the goods may be misplaced or replaced.

In some embodiments of the present disclosure, the self-service vending device further includes an imaging apparatus, and the vending method further includes: acquiring image information acquired by the imaging apparatus when a user purchases goods so as to monitor the user's behavior, so that the vending method is safer and more reliable.

To achieve the above objectives, embodiments of a fourth aspect of the present disclosure provide a non-transitory computer readable storage medium having a computer program stored therein that, when executed, causes the vending method for the self-service vending device as described above to be implemented.

According to the non-transitory computer readable storage medium of embodiments of the present disclosure, by executing the vending method for the self-service vending device as described above, the misplacement or replacement of the goods may be identified without relying on the RFID tag, thereby guaranteeing benefits of merchants and users.

### BRIEF DESCRIPTION OF THE DRAWINGS

FIG. 1 is a front view of a self-service vending device according to an embodiment of the present disclosure;
FIG. 2 is a side view of the self-service vending device of FIG. 1;
FIG. 3 is a block diagram of a self-service vending device according to an embodiment of the present disclosure;
FIG. 4 is a block diagram of a self-service vending device according to an embodiment of the present disclosure;
FIG. 5 is a block diagram of a self-service vending system according to an embodiment of the present disclosure;
FIG. 6 is a flow chart of a vending method for a self-service vending device according to an embodiment of the present disclosure; and
FIG. 7 is a flow chart of a vending method for a self-service vending device according to an embodiment of the present disclosure.

### Reference numerals:

self-service vending system 1000;
self-service vending device 100 and server 200, client 300;
device body 10, door 20, handle 11, shelf 30, tray 31, weighing module 40, micro-control unit 41, weighing unit 42, main control module 50, main control board 51, main control MCU 52, communication module 60, alarm module 61, imaging apparatus 70, user information identification module 80, display module 90, power supply module 91, illumination module 92, door switch module 93, load control module 94 and weighing sensor 421.

### DETAILED DESCRIPTION

Embodiments of the present disclosure will be described in detail below, examples of which are illustrated in the drawings. The same or similar elements and the elements having the same or similar functions are denoted by like reference numerals throughout the descriptions. Embodiments described below with reference to drawings are explanatory, serve to explain the present disclosure, and are not construed to limit the present disclosure.

A self-service vending device according to embodiments of a first aspect of the present disclosure is described below with reference to accompanying drawings.

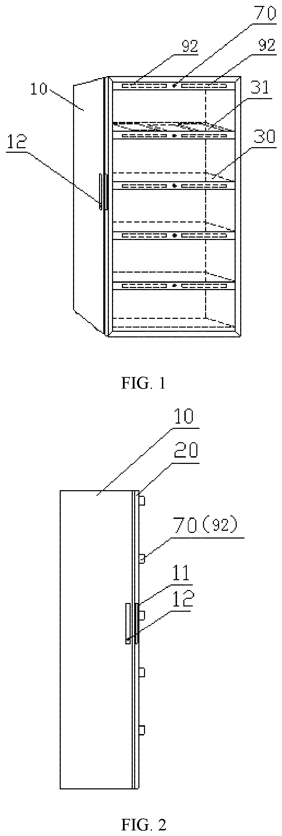

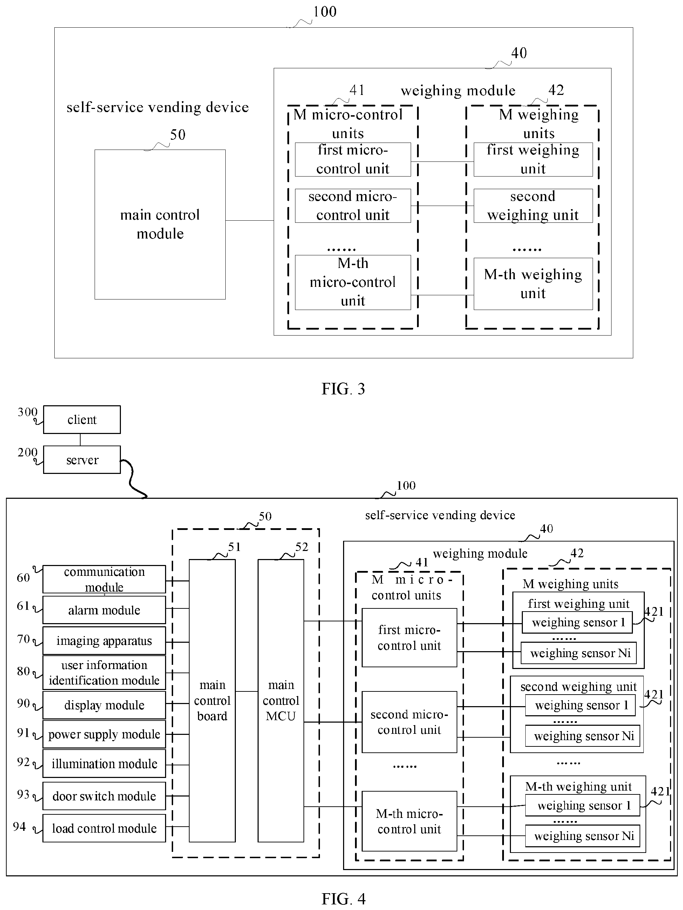

FIG. 1 is a front view of a self-service vending device according to an embodiment of the present disclosure, FIG. 2 is a side view of the self-service vending device of FIG. 1, FIG. 3 is a block diagram of a self-service vending device according to embodiments of the first aspect of the present disclosure, and as shown in FIG. 1 to FIG. 3, the self-service vending device 100 according to embodiments of the present disclosure includes a device body 10, a door 20, M shelves 30 mounted in the device body 10, a weighing module 40, and a main control module 50.

In embodiments of the present disclosure, the self-service vending device 100 may be a self-service vending cabinet, a self-service vending machine, a self-service vending box or other vending devices, and has a basic structure of a common self-service vending device, for example, the self-service vending device includes a door handle 11 mounted on the door 20 for opening and closing the door 20, and a lock 12 controlled by the main control module 50 for keeping the door closed, a main portion of the lock 12 is mounted on the device body 10, a lock catch is mounted on the door 20, and the door 20 may be a transparent door, so that a user may view goods placed in the device body 10, which will not be described in detail herein.

M is a positive integer, specifically, the shelves 30 are located in a cavity defined by the device body 10, and the number of the shelves 30 may be chosen according to specific situations. Goods may be placed on the shelves 30. In some embodiments, the same one shelf 30 is required to place a same kind of goods, and is not allowed to place other goods, and goods having the same information, such as having the same type, unit weight, unit price and the like, may be regarded as the goods of the same kind. The shelves 30 each may be edited with an identifier, and codes of respective shelves 30 and information related to the goods placed thereon, such as the kind, the unit weight, the unit price, *etc.,* may be uploaded and prestored at the time of restocking.

In some embodiments of the present disclosure, as shown in FIG. 3, the weighing module 40 includes M micro-control units 41 and M weighing units 42 disposed corresponding to the shelves 30, the micro-control unit 41 and the weighing unit 42 disposed corresponding to each shelf 30 are connected to each other, and the weighing unit 42 is configured to acquire a weight of the goods on the corresponding shelf 30.

The main control module 50 is connected to each of the M micro control units 41, and is configured to obtain weight information of the goods on each shelf 30 after vending, and to determine vending information according to a weight change of the goods on each shelf 30 before and after vending goods.

Specifically, FIG. 4 is a block diagram of a self-service vending device according to an embodiment of the present disclosure, as shown in FIG. 4, the main control module 50 may include a main control board 51 and a main control microcontroller unit (MCU) 52, and through the main control board 51, information interaction between the modules of the self-service vending device 100 is realized. After detecting a selection ending signal, such as a door-closing signal, the main control board 51 sends a query instruction to the main control MCU 52, the main control MCU 52 sends the query instruction to the micro-control unit 41 of each shelf 30, and the M micro-control units 41 obtain the weight information acquired by the respective weighing module 40, respectively, such as the weight of the goods on each shelf 30, and summarize the weight information of the goods on each shelf 30 to the main control MCU 52. In some embodiments of the present disclosure, the main control MCU 52 may retrieve a weight value of the goods on each shelf 30 acquired and stored at the last door-closing, i.e., before the current vending, calculate the weight change of the goods on each shelf 30 before and after the current vending, determine the kind of the goods placed on each shelf 30 according to the code of each shelf 30, and determine the vended number of the goods on each shelf 30 according to the weight change and the prestored relevant information, such as the unit weight, of the goods pre-placed on each shelf 30. If A quotient of the weight change and the unit weight of the goods on a certain tray meets an integer proportion, indicating that the goods on this tray are purchased by the user, the number of the goods purchased by the user is calculated, a total price is obtained according to the number and the unit price of the goods purchased by the user, and the total price is automatically uploaded to a payment system to settle accounts and deduct money, so as to complete the transaction.

In some embodiments of the present disclosure, determining the vending information according to the weight change of the goods on each shelf 30 before and after vending may also be implemented by the server. As shown in FIG. 4, the self-service vending device 100 may further include a communication module 60. The communication module 60 is connected to the main control module 50, and configured to upload the weight information of the goods on each shelf 30 to the server 200. Specifically, the main control module 50 sends received data to the server 200, and the server 200 determines a name and the number of the goods purchased by the user according to the current weight change of the goods on each shelf 30, and then calculate the total price of each kind of goods according to the vended number and the unit price of each kind of goods to settle accounts. The server 200 may also provide the goods information and the deduction information to the client 300, and the user may clearly know the shopping condition this time through the client 300.

In the self-service vending device 100 according to embodiments of the present disclosure, the M micro-control unit 41 and the M weighing unit 42 are disposed corresponding to the M shelves, respectively, the M micro-control units 41 monitor the weight of the goods on each shelf 30, and the main control module 50 summarizes the weight information of the goods on each shelf 30 after vending, and determines the vending information according to the weight change of the goods on each shelf 30 before and after vending, without relying on the RFID electronic tag. Therefore, the self-service vending device 100 is low in cost and easy to popularize.

The goods may be directly placed on the corresponding shelf 30 according to their kinds. It is also possible that trays may be placed on the shelves 30, and the goods may be placed on the trays according to their kinds. In some embodiments of the present disclosure, as shown in FIG. 4, Ni trays 31 are placed on the i^{th} shelf of the M shelves, where i is a positive integer and i ≤ M, and Ni is a positive integer. The weighing unit 42 corresponding to the respective shelf 30 includes Ni weighing sensors 421, and the Ni weighing sensors 421 are arranged corresponding to the Ni trays 31 and are configured to acquire the weight of goods on the respective trays 31. The number of the trays 31 placed on each shelf 30 and the number of the weighing sensors 421 provided for each shelf 30 may be determined according to a specific condition. Each tray 31 is placed with goods of same kind and weight, and is not allowed to place goods of different kinds, and the identifier, such as the code, of each tray 31 and the relevant information of the goods placed thereon may be uploaded to the main control module 50 or the server 200 when restocking goods. The micro control unit 41 disposed corresponding to the respective shelf 30 is connected to the Ni weighing sensors 421 of the shelf 30, distributes addresses for the weighing sensors 421 of the shelf 30, acquires information from the weighing sensors 421 of the shelf 30, and sends the acquired information to the main control module 50 to identify the vending information.

In some embodiments of the present disclosure, the main control module 50 or the server 200 is further configured to determine the kind and the unit weight of the goods on the tray 31 according to the identifier of the tray 31, and determine the vended number of the goods on the tray 31 according to the weight change of the goods on the tray 31 before and after vending and the unit weight of the goods on the tray 31, so that the price of the goods may be calculated for settlement.

Specifically, relevant information of the goods placed on the respective tray 31, including the kind, the unit weight and the unit price of the goods, may be retrieved according to the identifier of the tray 31, and it is determined whether the weight change of the goods on the tray 31 before and after vending and the unit weight of the goods on the tray 31 satisfy a relation of an integral multiple, if the relation of integral multiple is satisfied, it is determined that the user has purchased the goods, and the quotient between the weight change and the unit weight of the goods on the tray 31 is regarded as the number of the purchased goods, so that the vending information of the goods on each tray 31 may be obtained. Further, the unit price of the goods on each tray 31 is retrieved to calculate the total price, so as to automatically settle accounts and deduct money to complete the transaction.

In some embodiments of the present disclosure, as shown in FIG. 4, the self-service vending device 100 according to embodiments of the present disclosure may further include an alarm module 61. The alarm module 61 is connected to the main control module 50, and configured to issue an alarm prompt when the quotient of the weight change of the goods on a tray 31 before and after vending and the unit weight of the goods on the tray 31 is a non-integer. Specifically, if the weight change of the goods on a tray 31 before and after vending is not the integral multiple of the unit weight of the goods on the tray 31, it is considered that there are goods misplaced by the user, or the goods originally placed on the tray 31 are replaced by the user, and at this time, the alarm prompt is issued to prompt the user that the position of the current goods is incorrect, and facilitate the user to place the goods to a correct position, and then to do the payment. Meanwhile, alarm information may be sent to a backstage staff, so as to facilitate the backstage staff to judge whether there is vandalism.

In some embodiments, as shown in FIG. 1 to FIG. 4, the self-service vending device 100 further includes an imaging apparatus 70. The imaging apparatus 70 is connected to the main control module 50 and is configured to acquire image information of the user when the user purchases the goods. The imaging apparatus 70 may be mounted at a top side or left and right sides of the inside of the device body 10. Specifically, the imaging apparatus 70 may shoot a dynamic video after the user opens the door to monitor the user's behavior. When the alarm information is observed through a background system, the backstage staff may call a whole-course purchasing video acquired by the imaging apparatus 7 after the user opens the door, so that the staff may confirm whether the user has bad behaviors, such as intentionally damage or replace the goods and the like.

In some embodiments, as shown in FIG. 4, the self-service vending device 100 further includes a user information identification module 80, and the user information identification module 80 is connected to the main control module 50 and configured to detect user identification input information. For example, the main control module 50 opens the lock after performing personal identity verification through the user information identification module 80, and sends a shooting instruction to the imaging apparatus 70, and the imaging apparatus 70 is powered on to shoot a video after receiving the instruction, so as to monitor the behavior of the user when purchasing goods. As an example, the user information identification module 80 may be a code scanning module, after the user scans through the client, the server 200 detects and checks the user information, and then sends a door opening instruction to the main control module 50 to control the lock opening, and the user may purchase the goods at will after the door is opened by code scanning. Besides the code scanning, the lock may be opened by voice recognition, password entry, or biometric recognition, such as fingerprint information recognition, palm print information recognition, palm vein information recognition, finger vein information recognition, iris information recognition, or face information recognition, which will not be specifically limited herein.

As shown in FIG. 4, the self-service vending device 100 may further include a display module 90, and the display module 90 is connected to the main control module 50 and configured to output one or more of unlocking identification information, the kind and the number of current goods, details of goods purchased by the user, and deduction information, so that the user may learn about relevant conditions more intuitively. The user may also check the shopping information through the client, which is convenient, intuitive and clear at a glance.

In embodiments of the present disclosure, as shown in FIG. 4, the self-service vending device 100 may also be provided with a power supply module 91, an illumination module 92, a door switch module 93, and a load control module 94. The power supply module 91 is connected to the main control module 50, and the device may be powered through the power supply module 91. The illumination module 92 is connected to the main control module 50, and may be mounted inside the device body 10 at two sides of a door frame, and is configured to supplement light for the imaging apparatus 70 during shooting when light is insufficient so as to ensure a shooting effect. The door switch module 93 is connected to the main control module 50, and is configured to open the lock 12 when receiving a door opening signal, and to close the lock 12 when receiving a door closing signal. In some embodiments, the door 20 may be integrated, and may be connected to the device body 10 in an openable-closable manner, or may be in a split form, for example, the door 20 includes M door units, and the M door units are arranged corresponding to the M shelves, that is, one door unit is arranged corresponding to each shelf 30 to independently control the opening and closing of the door unit, which is more convenient and flexible. The load control module 94 is connected to the main control module 50 and configured to control a basic load of the device body 10.

In summary, with the self-service vending device 100 according to embodiments of the present disclosure, the micro control unit 41 of each shelf 30 controls the weighing sensors of the respective shelf, and summarizes weight data of each shelf 30 to the main control module 50, the main control module 50 identifies the kind and the number of the goods purchased by the user according to the weight change of the goods on each shelf 30 or each tray 31, or the main control module 50 uploads the summarized data to the server 200, and the server 200 identifies the kind and the number of the goods purchased by the user according to the weight change. Further, automatic settlement is performed according to the identified goods information. Simultaneously, in order to prevent the vandalism of the user, the imaging apparatus 70 may be used to shoot the dynamic video during the shopping of the user to monitor the user's behavior. The self-service vending device 100 according to embodiments of the present disclosure is safe, reliable, and easy to operate, and the user experiences are improved. By adopting the solution, a network topology of the weighing module 40 is clear and simple in structure, and the weighing unit is convenient to position.

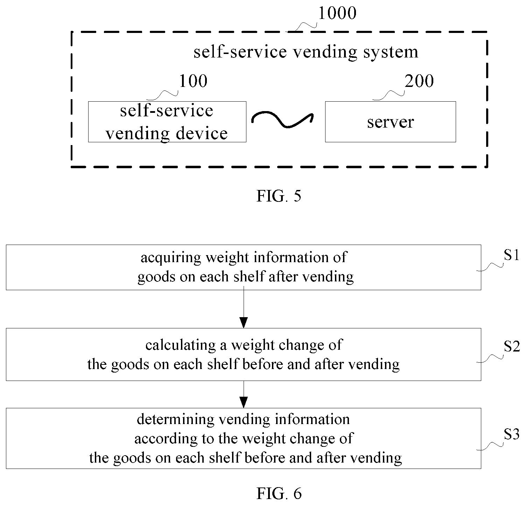

Based on the self-service vending device according to embodiments of the above aspect, as shown in FIG. 5, a self-service vending system 1000 according to embodiments of a second aspect of the present disclosure includes the self-service vending device 100 as described in embodiments of the above aspect and a server 200.

In embodiments of the present disclosure, the goods are placed on a certain shelf or a certain tray by kinds, and only the goods of the same kind are allowed to be placed on the same shelf or the same tray. The specific constitution and the position arrangement of a weighing module of the self-service vending device 100 may refer to the description of the above embodiments, which will not be elaborated here.

During the goods purchasing process, the self-service vending device 100 acquires the weight information of the goods on each shelf or each tray, and further may upload the acquired weight information to the server 200. The server 200 performs data processing and goods recognition, and determines the vending information according to the weight change of goods on the shelf of the self-service vending device 100 before and after vending. Specifically, the server 200 acquires the number of goods purchased by the user according to the weight change of the goods on each shelf or each tray and the unit weight of the respective goods, accumulates the kind and the number of the goods on each shelf or tray purchased by the user, and calculates the total price of the goods purchased by the user according to the number and the unit price of the respective goods. Further, the vending information may be automatically sent to the payment system to settle accounts and deduct money, so as to complete the transaction.

Based on the self-service vending device 100 and the server 200, the self-service vending system 1000 according to embodiments of the present disclosure may realize automatic goods identification and payment of the self-service vending device, without relying on the RFID electronic tag. Further, the self-service vending system 1000 has low cost, and is easy to popularize.

A vending method for a self-service vending device according to embodiments of a third aspect of the present disclosure is described below with reference to the accompanying drawings. In embodiments of the present disclosure, the self-service vending device includes a device body, a door, M shelves mounted in the device body, a weighing module and a main control module, where M is a positive integer. The weighing module includes M micro control units and M weighing units disposed corresponding to the M shelves, and the main control module is connected to each of the M micro control units.

FIG. 6 is a flow chart of a vending method for a self-service vending device according to an embodiment of the present disclosure, and as shown in FIG. 6, the vending method for the self-service vending device according to embodiments of the present disclosure includes the followings.

At S1, weight information of goods on each shelf after vending is acquired.

For example, data acquisition is performed by the weighing unit corresponding to the respective shelf so as to acquire the weight information of goods on each shelf.

At S2, a weight change of the goods on each shelf before and after vending is calculated.

At S3, vending information is determined according to the weight change of the goods on each shelf before and after vending.

In embodiments of the present disclosure, data calculation and vending information identification may be performed by the self-service vending device itself, or the relevant data may be uploaded to the server, by which the vending information is obtained.

Specifically, after the user selects goods, and when a selection completing signal, such as a door closing signal is detected, a weight value of the goods on each shelf acquired and stored at the last door-closing, i.e., before the current vending, is retrieved, the weight change of the goods on each shelf before and after the current vending is calculated, the kind of the goods placed on each shelf may be determined according to the code of each shelf, the vended number of the goods on each shelf is determined according to the weight change and the prestored relevant information, such as the unit weight, of the goods pre-placed on each shelf, a total price is obtained according to the vended number and the unit price of the goods on each shelf, and the total price is automatically uploaded to the payment system to settle accounts and deduct money, so as to complete the transaction. The vending method according to embodiments of the present disclosure can realize automatic identification and automatic transaction, does not need to change the user's shopping habit, and the safe and convenient non-secret payment makes the transaction simple and convenient, and thus the user experience is good.

According to the vending method for the self-service vending device of embodiments of the present disclosure, based on the weight detection of the M micro-control units and the M weighing units arranged corresponding to the M shelves, respectively, the weight of goods on each shelf is obtained, and the vending information is determined according to the weight change of the goods on each shelf before and after vending, without relying on the RFID electronic tag, the cost is low, the method is simple and easy to popularize.

In embodiments of the present disclosure, the goods may be directly placed on the shelf, or the tray may be mounted on the shelf, and the goods may be placed on the tray, but the same shelf or tray is not allowed to place the goods of different kinds.

In some embodiments of the present disclosure, Ni trays 31 are placed on the i^{th} shelf of the M shelves, where i is a positive integer and i ≤ M, and Ni is a positive integer. The weighing unit corresponding to the respective shelf includes Ni weighing sensors, and the Ni weighing sensors are arranged corresponding to the Ni trays and are configured to acquire the weight of goods on the respective trays. The trays may be encoded, and relevant information of the trays and the respective goods placed thereon, such as the kind, the unit weight, the unit price, *etc.* of the respective goods, may be uploaded and prestored at the time of restocking. After the user selects the goods, the weight change of the goods on each tray before and after vending is obtained, and the kind and the unit weight of the goods on each tray are determined according to the respective identifier of each tray; whether the weight change of the goods on a tray before and after vending is an integral multiple of the unit weight of the goods on the tray is determined; if the weight change of the goods on the tray before and after vending is an integral multiple of the unit weight of the goods on the tray, it is considered that the user selects the goods on the tray, the vended number of the goods on the tray is calculated according to the corresponding weight change and the unit weight, and all kinds of goods purchased by the user and their respective vended number are accumulated to obtain the vending information. Further, according to the vended number and the unit price of each kind of goods, the total price may be calculated and then automatically uploaded to the payment system to deduct money, so as to complete the transaction. With the method of the present disclosure, neither there is a need to make any modification to the goods or attach labels to the goods, nor to additionally increase the cost of the goods.

In embodiments of the present disclosure, if the quotient of the weight change of the goods on a tray before and after vending and the unit weight of the goods on the tray is a non-integer, an alarm prompt will be issued. Specifically, if the weight change of the goods on a tray before and after vending is not the integral multiple of the unit weight of the goods on the tray, it is considered that there are goods misplaced by the user, or the goods originally placed on the tray are replaced by the user, and at this time, the alarm prompt is issued to prompt the user that the position of the current goods is incorrect, and facilitate the user to place the goods to a correct position, and then to do the payment. Meanwhile, alarm information may be sent to a backstage staff, so as to facilitate the backstage staff to judge whether there is vandalism.

In some embodiments, the self-service vending device further includes an imaging apparatus, and the user's behavior may be monitored by acquiring from the imaging apparatus the image information of the user when the user purchases goods. Specifically, a dynamic video may be shot by the imaging apparatus after the door is opened. When the alarm information is observed through a background system, the backstage staff may call a whole-course purchasing video acquired by the imaging apparatus after the user opens the door, so that the staff may confirm whether the user has bad behaviors, such as intentionally damage or replace the goods and the like.

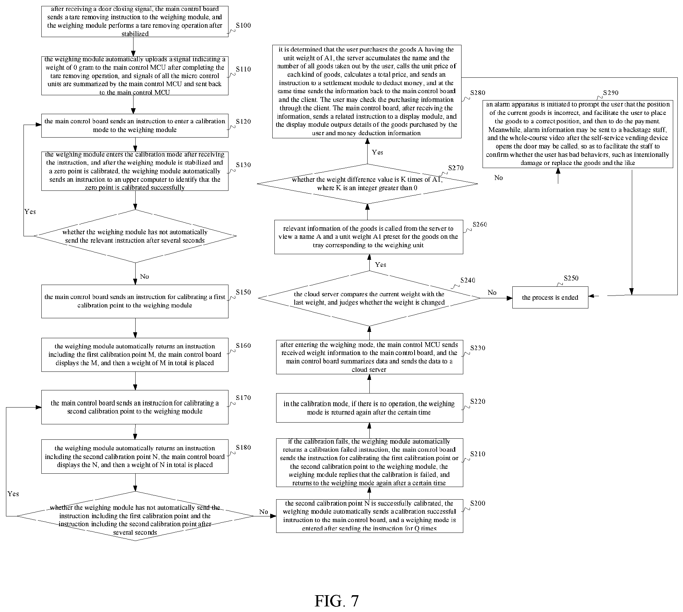

In a practical application, when the self-service vending device is provided with the weighing module, the weighing module needs to remove tare, return to zero and be calibrated so as to obtain more accurate weighing data. FIG. 7 is a flow chart of a vending method for a self-service vending device according to an embodiment of the present disclosure, as shown in FIG. 7, the vending method specifically includes the followings.

At S100, after receiving a door closing signal, the main control board sends a tare removing instruction to the weighing module, and the weighing module performs a tare removing operation after stabilized.

At S110, the weighing module automatically uploads a signal indicating a weight of 0 gram to the main control MCU after completing the tare removing operation, and signals of all the micro control units are summarized by the main control MCU and sent back to the main control MCU.

At S120, the main control board sends an instruction to enter a calibration mode to the weighing module.

At S130, the weighing module enters the calibration mode after receiving the instruction, and after the weighing module is stabilized and a zero point is calibrated, the weighing module automatically sends an instruction to an upper computer to identify that the zero point is calibrated successfully.

At S140, whether the weighing module has not automatically send the relevant instruction after several seconds is judged, if yes, return to the step S130, otherwise, enter the step S150.

At S150, the main control board sends an instruction for calibrating a first calibration point to the weighing module.

At S160, the weighing module automatically returns an instruction including the first calibration point M (0 < M < K, it can be taken that M ≈ 1/2P, and P is a maximum range of the weighing module), the main control board displays the M, and then a weight of M in total is placed.

At S170, the main control board sends an instruction for calibrating a second calibration point to the weighing module.

At S180, the weighing module automatically returns an instruction including the second calibration point N (1/2P < N < P, M < N, N ≈ P), the main control board displays the N, and then a weight of N in total is placed.

At S190, whether the weighing module has not automatically send the instruction including the first calibration point and the instruction including the second calibration point after several seconds is judged, if yes, return to the step S170, otherwise, enter the step S200.

At S200, the second calibration point N is successfully calibrated, the weighing module automatically sends a calibration successful instruction to the main control board, and a weighing mode is entered after sending the instruction for Q (2 ≤ Q ≤ 10, and Q is an integer) times.

At S210, if the calibration fails, the weighing module automatically returns a calibration failed instruction, the main control board sends the instruction for calibrating the first calibration point or the second calibration point to the weighing module, the weighing module replies that the calibration is failed, and returns to the weighing mode again after a certain time.

At S220, in the calibration mode, if there is no operation, the weighing mode is returned again after the certain time.

At S230, after entering the weighing mode, the main control MCU sends received weight information to the main control board, and the main control board summarizes data and sends the data to a cloud server.

At S240, the cloud server compares the current weight with the last weight, and judges whether the weight is changed, that is, judges whether a difference value of the current weight and the last weight is 0. If the difference value is 0, it indicates that the weight of the tray corresponding to the current weighing unit is not changed, that is, the user does not take any goods away from the tray corresponding to the weighing unit, and the step S250 is entered, otherwise, if the difference value is not 0, the step S260 is entered.

At S250, the process is ended.

At S260, relevant information of the goods is called from the server to view a name A and a unit weight A1 preset for the goods on the tray corresponding to the weighing unit.

At S270, whether the weight difference value is K times of A1 is judged, where K is an integer greater than 0. If the weight difference value is K times of A1, the step S280 is entered, otherwise, the step S290 is entered.

At S280, it is determined that the user purchases the goods A having the unit weight of A1, the server accumulates the name and the number of all goods taken out by the user, calls the unit price of each kind of goods, calculates a total price, and sends an instruction to a settlement module to deduct money, and at the same time sends the information back to the main control board and the client. The user may check the shopping information through the client. The main control board, after receiving the information, sends a related instruction to a display module, and the display module outputs details of the goods purchased by the user and money deduction information, and the step S250 is entered.

At S290, an alarm apparatus is initiated to prompt the user that the position of the current goods is incorrect, and facilitate the user to place the goods to a correct position, and then to do the payment. Meanwhile, alarm information may be sent to a backstage staff, and the whole-course video after the self-service vending device opens the door may be called, so as to facilitate the staff to confirm whether the user has bad behaviors, such as intentionally damage or replace the goods and the like.

Some embodiments of the present disclosure also provide a non-transitory computer readable storage medium having a computer program stored therein that, when executed, causes the vending method for the self-service vending device as described in the above embodiments to be implemented.

Generally speaking, according to the vending method for the self-service vending device as described in embodiments of the disclosure, the goods are placed on different shelves or trays by kinds, the same shelf or tray only allows to place the same kind of goods, the weighing unit of each shelf is controlled by the micro-control module of the respective shelf, the weight data of each shelf or each tray are summarized to the main control module, and the vending information is determined according to the weight change of the goods on each shelf before and after vending, without relying on the RFID electronic tag, and the method is low in cost and easy to popularize. Further, with the imaging apparatus to monitor user's behavior, the alarm prompt will be issued when the weight change and the unit weight of a certain kind of goods do not meet an integer proportion, so that the method is safer and more reliable.

It should be noted that, in the description of the present disclosure, any process or method described in a flow chart or described herein in other ways may be understood to include one or more modules, segments or portions of codes of executable instructions for achieving specific logical functions or steps in the process, and the scope of a preferred embodiment of the present disclosure includes other implementations, in which the order of execution is different from what is shown or discussed, including executing functions in a substantially simultaneous manner or in an opposite order according to the related functions. These and other aspects should be understood by those skilled in the art.

The logic and/or step shown in the flow chart or described in other manners herein, for example, a particular sequence table of executable instructions for realizing the logical function, may be specifically achieved in any computer readable medium to be used by the instruction execution system, device or equipment (such as the system based on computers, the system comprising processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by hardware, software, firmware or combination thereof. In the above embodiments, a plurality of steps or methods may be realized by software or firmware stored in the memory and executed by an appropriate instruction execution system. For example, if it is realized by the hardware, likewise in another embodiment, it may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of present disclosure have been shown and described above, it should be understood that above embodiments are just explanatory, and cannot be construed to limit the present disclosure, and for those skilled in the art, changes, modifications, alternatives, and variations can be made to the embodiments within the scope of the present disclosure.

## Claims

1. A self-service vending device (100), comprising:
a device body (10), a door (20), one or more shelves (30) mounted in the device body (10);
a weighing module (40), comprising a micro-control unit (41) and a weighing unit (42) disposed corresponding to each shelf (30), the micro-control unit (41) and the weighing unit (42) disposed corresponding to each shelf (30) being connected to each other, and the weighing unit (42) being configured to acquire a weight of goods on the corresponding shelf (30);
a main control module (50), connected to the micro-control unit (41) corresponding to each shelf (30), and configured to obtain weight information of the goods on each shelf (30) after vending, and to determine vending information according to a weight change of the goods on each shelf (30) before and after vending, wherein any of the one or more shelves (30) is provided with one or more trays (31) and one or more weighing sensors (421); the weighing unit (42) corresponding to each shelf (30) comprises the same number of the one or more weighing sensors (421) as the number of the one or more trays (31), and the one or more weighing sensors (421) are arranged corresponding to the one or more trays (31) and configured to respectively acquire the weight of the goods on the one or more trays (31),
wherein the self-service vending device (100) further comprises:
a user information identification module (80), connected to the main control module (50), configured to detect user identification input information;
a lock (12), controlled by the main control module, and configured to lock and unlock the door;
a communication module (60), connected to the main control module (50) and configured to upload the weight information of the goods on each shelf (30) to a server (200);
an imaging apparatus (70), connected to the main control module (50) and configured to acquire image information when a user purchases goods; and
an alarm module (61), connected to the main control module (50):
wherein, after performing personal identity verification of the user through the user information identification module, the main control module is further configured to control the lock to unlock the door and to send a shooting instruction to the imaging apparatus (70) which is, after receiving the shooting instruction, powered on to shoot a video of the user whilst the user purchases goods so as to monitor the user's behavior;
wherein the main control module (50) or the server (200) is further configured to determine a kind and a unit weight of the goods on a respective tray (31) of the one or more trays according to an identifier of the respective tray (31), and determine the vended number of the goods on the respective tray (31) according to the weight change of the goods on the respective tray (31) before and after vending and the unit weight of the goods on the respective tray (31);
wherein the alarm module (61) is configured to issue an alarm prompt when it is confirmed that a quotient of the weight change of the goods on the respective tray (31) before and after vending and the unit weight of the goods on the respective tray (31) is a non-integer indicating that the weight change of the goods on the respective tray (31) before and after vending is not an integral multiple of the unit weight goods of the goods on the respective tray (31);
wherein the alarm prompt is issued to prompt the user that the position of the current goods is incorrect, facilitating the user to place the goods to a correct position and then do the payment, wherein, meanwhile, alarm information is sent to a backstage staff; and
wherein, when the alarm information is observed through a background system, the backstage staff may call the video acquired by the imaging apparatus (7) for confirming, by the backstage staff, whether the user has bad behaviour, such as intentionally damaging or replacing the goods.

2. The self-service vending device (100) according to claim 1, wherein the door (20) comprises at least one door unit, and the at least one door unit is arranged corresponding to the one or more shelves (30).

3. The self-service vending device (100) according to claim 1, further comprising:
a display module (90), connected to the main control module (50) and configured to output one or more of unlocking identification information, the kind and the number of current goods, details of goods purchased by the user and deduction information.

4. A self-service vending system (1000), comprising:
a self-service vending device (100) according to any one of claims 1 to 2;
a server (200), configured to determine vending information according to a weight change of goods on the shelf (30) of the self-service vending device (100) before and after vending.

5. A vending method for a self-service vending device (100), wherein
the self-service vending device (100) comprises a device body (10), a door (20), a lock configured to lock and unlock the door, one or more shelves (30) mounted in the device body (10), a weighing module (40), a main control module (50), a user information identification module (80) configured to detect user identification input information, an alarm module (61), and an imaging apparatus (70), the weighing module (40) comprises a micro-control unit (41) and a weighing unit (42) corresponding to each shelf (30), and the main control module (50) is connected to the micro-control unit (41) corresponding to each shelf (30); and
the vending method comprises:
performing personal identity verification of a user through the user information identification module;
controlling the lock to unlock the door;
after opening the door, controlling the imaging apparatus to shoot a video of the user whilst the user purchases goods;
acquiring weight information of goods on each shelf (30) after vending;
calculating a weight change of the goods on each shelf (30) before and after vending;
determining vending information according to the weight change of the goods on each shelf (30) before and after vending;
wherein any of the one or more shelves (30) is provided with one or more trays (31) and one or more weighing sensor (421); the weighing unit (42) corresponding to each shelf (30) comprises the same number of the one or more weighing sensors (421) as the number of the one or more trays (31), and the one or more weighing sensors (421) are arranged corresponding to the one or more trays (31) and configured to respectively acquire the weight of the goods on the respective one or more trays (31), wherein determining vending information according to the weight change of the goods on each shelf (30) before and after vending comprises:
determining a kind and a unit weight of the goods on a respective tray (31) of the one or more trays (31) according to an identifier of the respective tray (31);
confirming that the weight change of the goods on the respective tray (31) before and after vending is an integral multiple of the unit weight of the goods on the respective tray (31), and calculating the vended number of the goods on the respective tray (31) according to the weight change and the unit weight; and
issuing an alarm prompt when it is confirmed that a quotient of the weight change of the goods on the respective tray (31) before and after vending and the unit weight of the goods on the respective tray (31) is a non-integer indicating that the weight change of the goods on the respective tray (31) before and after vending is not an integral multiple of the unit weight of the goods on the respective tray (31);
wherein the alarm prompt is issued to prompt the user that the position of the current goods is incorrect, facilitating the user to place the goods to a correct position and then to do the payment, wherein, meanwhile, alarm information is sent to a backstage staff; and .
wherein, when the alarm information is observed through a background system, the backstage staff may call the video acquired by the imaging apparatus (7) for confirming, by the backstage staff, whether the user has bad behaviour, such as intentionally damaging or replacing the goods.

6. A non-transitory computer readable storage medium, having a computer program stored therein that, when executed, causes a vending method for a self-service vending device (100) according to claim 5 to be implemented.

## Patentansprüche

1. Selbstbedienungsverkaufsautomat (100), umfassend:
einen Automatenkörper (10), eine Tür (20), einen oder mehrere Regalböden (30), die in dem Automatenkörper (10) montiert sind;
ein Wägemodul (40), umfassend eine Mikrosteuereinheit (41) und eine Wägeeinheit (42), die entsprechend jedem Regalboden (30) angeordnet sind, wobei die Mikrosteuereinheit (41) und die Wägeeinheit (42), die entsprechend jedem Regalboden (30) angeordnet sind, miteinander verbunden sind, und wobei die Wägeeinheit (42) dazu konfiguriert ist, ein Gewicht von Waren auf dem entsprechenden Regalboden (30) zu erfassen;
ein Hauptsteuermodul (50), das mit der Mikrosteuereinheit (41), die jedem Regalboden (30) entspricht, verbunden und dazu konfiguriert ist, Gewichtsinformationen der Waren auf jedem Regalboden (30) nach dem Verkauf zu erlangen, und Verkaufsinformationen gemäß einer Gewichtsänderung der Waren auf jedem Regalboden (30) vor und nach dem Verkauf zu bestimmen, wobei beliebige des einen oder der mehreren Regalböden (30) mit einem oder mehreren Fächern (31) und einem oder mehreren Wägesensoren (421) versehen sind; wobei die Wägeeinheit (42), die jedem Regalboden (30) entspricht, die gleiche Anzahl des einen oder der mehreren Wägesensoren (421) wie die Anzahl des einen oder der mehreren Fächer (31) umfasst und der eine oder die mehreren Wägesensoren (421) entsprechend dem einen oder den mehreren Fächer (31) angeordnet und dazu konfiguriert sind, jeweils das Gewicht der Waren auf dem einen oder den mehreren Fächern (31) zu erfassen,
wobei der Selbstbedienungsverkaufsautomat (100) ferner Folgendes umfasst:
ein Benutzerinformationsidentifikationsmodul (80), das mit dem Hauptsteuermodul (50) verbunden ist, das dazu konfiguriert ist, Benutzeridentifikationseingabeinformationen zu erkennen;
ein Schloss (12), das durch das Hauptsteuermodul gesteuert wird und dazu konfiguriert ist, die Tür zu verriegeln und zu entriegeln;
ein Kommunikationsmodul (60), das mit dem Hauptsteuermodul (50) verbunden und dazu konfiguriert ist, die Gewichtsinformationen der Waren auf jedem Regalboden (30) in einen Server (200) hochzuladen;
eine Bildgebungsvorrichtung (70), die mit dem Hauptsteuermodul (50) verbunden und dazu konfiguriert ist, Bildinformationen zu erfassen, wenn ein Benutzer Waren kauft; und
einem Alarmmodul (61), das mit dem Hauptsteuermodul (50) verbunden ist:
wobei nach Durchführen einer persönlichen Identitätsüberprüfung des Benutzers durch das Benutzerinformationsidentifikationsmodul das Hauptsteuermodul ferner dazu konfiguriert ist, das Schloss zu steuern, um die Tür zu entriegeln, und eine Aufnahmeanweisung an die Bildgebungsvorrichtung (70) zu senden, die nach Empfangen der Aufnahmeanweisung eingeschaltet ist, um ein Video des Benutzers aufzunehmen, während der Benutzer Waren kauft, um das Verhalten des Benutzers zu überwachen;
wobei das Hauptsteuermodul (50) oder der Server (200) ferner dazu konfiguriert ist, eine Art und ein Einheitsgewicht der Waren auf einem jeweiligen Fach (31) des einen oder der mehreren Fächer gemäß einer Kennung des jeweiligen Fachs (31) zu bestimmen und die verkaufte Anzahl der Waren auf dem jeweiligen Fach (31) gemäß der Gewichtsänderung der Waren auf dem jeweiligen Fach (31) vor und nach dem Verkauf und das Einheitsgewicht der Waren auf dem jeweiligen Fach (31) zu bestimmen;
wobei das Alarmmodul (61) dazu konfiguriert ist, einen Alarmhinweis auszugeben, wenn bestätigt wird, dass ein Quotient aus der Gewichtsänderung der Waren auf dem jeweiligen Fach (31) vor und nach dem Verkauf und dem Einheitsgewicht der Waren auf dem jeweiligen Fach (31) nicht ganzzahlig ist, was angibt, dass die Gewichtsänderung der Waren auf dem jeweiligen Fach (31) vor und nach dem Verkauf kein ganzzahliges Vielfaches der Einheitsgewichtswaren der Waren auf dem jeweiligen Fach (31) ist;
wobei der Alarmhinweis ausgegeben wird, um den Benutzer darauf hinzuweisen, dass die Position der aktuellen Waren falsch ist, um dem Benutzer zu erleichtern, die Ware an einer richtige Position zu platzieren und dann die Zahlung durchzuführen, wobei währenddessen Alarminformationen an Personal im Hintergrund gesendet werden; und
wobei, wenn die Alarminformationen durch ein Hintergrundsystem beobachtet werden, das Personal im Hintergrund das durch die Bildgebungsvorrichtung (7) erfasste Video aufrufen kann, um durch das Personal im Hintergrund zu bestätigen, ob der Benutzer ein Fehlverhalten aufweist, wie etwa absichtliches Beschädigen oder Austauschen der Waren.

2. Selbstbedienungsverkaufsautomat (100) nach Anspruch 1, wobei die Tür (20) mindestens eine Türeinheit umfasst und die mindestens eine Türeinheit entsprechend dem einen oder den mehreren Regalböden (30) angeordnet ist.

3. Selbstbedienungsverkaufsautomat (100) nach Anspruch 1, ferner umfassend:
ein Anzeigemodul (90), das mit dem Hauptsteuermodul (50) verbunden und dazu konfiguriert ist, eines oder mehrere von Entriegelungsidentifikationsinformationen, der Art und der Anzahl von aktuellen Waren, Details von Waren, die durch den Benutzer gekauft werden, und Rabattinformationen auszugeben.

4. Selbstbedienungsverkaufssystem (1000), umfassend:
einen Selbstbedienungsverkaufsautomaten (100) nach einem der Ansprüche 1 bis 2;
einen Server (200), der dazu konfiguriert ist, Verkaufsinformationen gemäß einer Gewichtsänderung von Waren auf dem Regalboden (30) des Selbstbedienungsverkaufsautomaten (100) vor und nach dem Verkauf zu bestimmen.

5. Verkaufsverfahren für einen Selbstbedienungsverkaufsautomaten (100), wobei
der Selbstbedienungsverkaufsautomat (100) einen Automatenkörper (10), eine Tür (20), ein Schloss, das dazu konfiguriert ist, die Tür zu verriegeln und zu entriegeln, einen oder mehrere Regalböden (30), die in dem Automatenkörper (10) montiert sind, ein Wägemodul (40), ein Hauptsteuermodul (50), ein Benutzerinformationsidentifikationsmodul (80), das dazu konfiguriert ist, Benutzeridentifikationseingabeinformationen zu erkennen, ein Alarmmodul (61) und eine Bildgebungsvorrichtung (70) umfasst, wobei das Wägemodul (40) eine Mikrosteuereinheit (41) und eine Wägeeinheit (42), die jedem Regalboden (30) entsprechen, umfasst und das Hauptsteuermodul (50) mit der Mikrosteuereinheit (41), die jedem Regalboden (30) entspricht, verbunden ist; und
das Verkaufsverfahren Folgendes umfasst:
Durchführen einer persönlichen Identitätsüberprüfung eines Benutzers durch das Benutzerinformationsidentifikationsmodul;
Steuern des Schlosses, um die Tür zu entriegeln;
Steuern der Bildgebungsvorrichtung nach Öffnen der Tür, um ein Video des Benutzers aufzunehmen, während der Benutzer Waren kauft;
Erfassen von Gewichtsinformationen von Waren auf jedem Regalboden (30) nach dem Verkauf;
Berechnen einer Gewichtsänderung der Waren auf jedem Regalboden (30) vor und nach dem Verkauf;
Bestimmung von Verkaufsinformationen gemäß der Gewichtsänderung der Waren auf jedem Regalboden (30) vor und nach dem Verkauf;
wobei beliebige des einen oder der mehreren Regalböden (30) mit einem oder mehreren Fächern (31) und einem oder mehreren Wägesensoren (421) versehen sind; wobei die Wägeeinheit (42), die jedem Regalboden (30) entspricht, die gleiche Anzahl des einen oder der mehreren Wägesensoren (421) wie die Anzahl des einen oder der mehreren Fächer (31) umfasst und der eine oder die mehreren Wägesensoren (421) entsprechend dem einen oder den mehreren Fächer (31) angeordnet und dazu konfiguriert sind, jeweils das Gewicht der Waren auf dem jeweiligen einen oder den jeweiligen mehreren Fächern (31) zu erfassen, wobei das Bestimmen von Verkaufsinformationen gemäß der Gewichtsänderung der Waren auf jedem Regalboden (30) vor und nach dem Verkauf Folgendes umfasst:
Bestimmen einer Art und eines Einheitsgewichts der Waren auf einem jeweiligen Fach (31) des einen oder der mehreren Fächer (31) gemäß einer Kennung des jeweiligen Fachs (31);
Bestätigen, dass die Gewichtsänderung der Waren auf dem jeweiligen Fach (31) vor und nach dem Verkauf ein ganzzahliges Vielfaches des Einheitsgewichts der Waren auf dem jeweiligen Fach (31) ist, und Berechnen der verkauften Anzahl der Waren auf dem jeweiligen Fach (31) gemäß der Gewichtsänderung und dem Einheitsgewicht; und
Ausgeben eines Alarmhinweises, wenn bestätigt wird, dass ein Quotient aus der Gewichtsänderung der Waren auf dem jeweiligen Fach (31) vor und nach dem Verkauf und dem Einheitsgewicht der Waren auf dem jeweiligen Fach (31) nicht ganzzahlig ist, was angibt, dass die Gewichtsänderung der Waren auf dem jeweiligen Fach (31) vor und nach dem Verkauf kein ganzzahliges Vielfaches des Einheitsgewichts der Waren auf dem jeweiligen Fach (31) ist;
wobei der Alarmhinweis ausgegeben wird, um den Benutzer darauf hinzuweisen, dass die Position der aktuellen Waren falsch ist, um dem Benutzer zu erleichtern, die Ware an einer richtige Position zu platzieren und dann die Zahlung durchzuführen, wobei währenddessen Alarminformationen an Personal im Hintergrund gesendet werden; und
wobei, wenn die Alarminformationen durch ein Hintergrundsystem beobachtet werden, das Personal im Hintergrund das durch die Bildgebungsvorrichtung (7) erfasste Video aufrufen kann, um durch das Personal im Hintergrund zu bestätigen, ob der Benutzer ein Fehlverhalten aufweist, wie etwa absichtliches Beschädigen oder Austauschen der Waren.

6. Nicht-flüchtiges computerlesbares Speichermedium, das ein darin gespeichertes Computerprogramm aufweist, das bei Ausführung bewirkt, dass ein Verkaufsverfahren für einen Selbstbedienungsverkaufsautomaten (100) nach Anspruch 5 implementiert wird.

## Revendications

1. Distributeur automatique en libre-service (100), comprenant :
un corps de dispositif (10), une porte (20), une ou plusieurs étagères (30) montées dans le corps de dispositif (10) ;
un module de pesage (40), comprenant une micro-unité de commande (41) et une unité de pesage (42) disposées en correspondance avec chaque étagère (30), la micro-unité de commande (41) et l'unité de pesage (42) disposées en correspondance avec chaque étagère (30) étant connectées l'une à l'autre, et l'unité de pesage (42) étant configurée pour acquérir un poids de marchandises sur l'étagère correspondante (30) ;
un module de commande principal (50), connecté à la micro-unité de commande (41) correspondant à chaque étagère (30), et configuré pour obtenir des informations de poids des marchandises sur chaque étagère (30) après la distribution automatique, et pour déterminer des informations de distribution automatique en fonction d'un changement de poids des marchandises sur chaque étagère (30) avant et après la distribution automatique, dans lequel l'une quelconque des une ou plusieurs étagères (30) est dotée d'un ou de plusieurs plateaux (31) et d'un ou de plusieurs capteurs de pesage (421) ; l'unité de pesage (42) correspondant à chaque étagère (30) comprend le même nombre des un ou plusieurs capteurs de pesage (421) que le nombre des un ou plusieurs plateaux (31), et les un ou plusieurs capteurs de pesage (421) sont agencés en correspondance avec les un ou plusieurs plateaux (31) et configurés pour acquérir respectivement le poids des marchandises sur les un ou plusieurs plateaux (31),
dans lequel le dispositif automatique en libre-service (100) comprend également :
un module d'identification d'informations d'utilisateur (80), connecté au module de commande principal (50), configuré pour détecter des informations saisies d'identification d'utilisateur ;
un verrou (12), commandé par le module de commande principal, et configuré pour verrouiller et déverrouiller la porte ;
un module de communication (60), connecté au module de commande principal (50) et configuré pour télécharger les informations de poids des marchandises sur chaque étagère (30) vers un serveur (200) ;
un appareil d'imagerie (70), connecté au module de commande principal (50) et configuré pour acquérir des informations d'image lorsqu'un utilisateur achète des marchandises ; et
un module d'alarme (61), connecté au module de commande principal (50) :
dans lequel, après l'exécution d'une vérification d'identité personnelle de l'utilisateur à travers le module d'identification d'informations d'utilisateur, le module de commande principal est également configuré pour commander le verrou pour déverrouiller la porte et pour envoyer une instruction de prise de vue à l'appareil d'imagerie (70) qui est, après la réception de l'instruction de prise de vue, mis sous tension pour filmer une vidéo de l'utilisateur pendant que l'utilisateur achète des marchandises afin de surveiller le comportement de l'utilisateur ;
dans lequel le module de commande principal (50) ou le serveur (200) est également configuré pour déterminer un type et un poids unitaire des marchandises sur un plateau respectif (31) des un ou plusieurs plateaux selon un identifiant du plateau respectif (31), et déterminer le nombre vendu des marchandises sur le plateau respectif (31) selon le changement de poids des marchandises sur le plateau respectif (31) avant et après la distribution automatique et le poids unitaire des marchandises sur le plateau respectif (31) ;
dans lequel le module d'alarme (61) est configuré pour émettre une invite d'alarme lorsqu'il est confirmé qu'un quotient du changement de poids des marchandises sur le plateau respectif (31) avant et après la distribution automatique et le poids unitaire des marchandises sur le plateau respectif (31) est un nombre non entier indiquant que le changement de poids des marchandises sur le plateau respectif (31) avant et après la distribution automatique n'est pas un multiple entier des marchandises de poids unitaire des marchandises sur le plateau respectif (31) ;
dans lequel l'invite d'alarme est émise pour signaler à l'utilisateur que la position des marchandises actuelles est incorrecte, facilitant ainsi l'utilisateur pour placer les marchandises à une position correcte puis effectuer le paiement, dans lequel, pendant ce temps, des informations d'alarme sont envoyées à un personnel en coulisses ; et
dans lequel, lorsque les informations d'alarme sont observées à travers un système d'arrière-plan, le personnel en coulisses peut appeler la vidéo acquise par l'appareil d'imagerie (7) pour confirmer, par le personnel en coulisses, si l'utilisateur a un mauvais comportement, comme endommager ou remplacer intentionnellement les marchandises.

2. Dispositif de distribution automatique en libre-service (100) selon la revendication 1, dans lequel la porte (20) comprend au moins une unité de porte, et l'au moins une unité de porte est agencée en correspondance avec les une ou plusieurs étagères (30).

3. Dispositif de distribution automatique en libre-service (100) selon la revendication 1, comprenant également :
un module d'affichage (90), connecté au module de commande principal (50) et configuré pour délivrer une ou plusieurs informations d'identification de déverrouillage, le type et le nombre de marchandises actuelles, des détails des marchandises achetées par l'utilisateur et des informations de déduction.

4. Système de distribution automatique en libre-service (1000), comprenant :
un dispositif de distribution automatique en libre-service (100) selon l'une quelconque des revendications 1 à 2 ;
un serveur (200), configuré pour déterminer des informations de distribution automatique en fonction d'un changement de poids des marchandises sur l'étagère (30) du dispositif de distribution automatique en libre-service (100) avant et après la distribution automatique.

5. Procédé de distribution automatique pour un dispositif de distribution automatique en libre-service (100), dans lequel
le distributeur automatique en libre-service (100) comprend un corps de dispositif (10), une porte (20), un verrou configuré pour verrouiller et déverrouiller la porte, une ou plusieurs étagères (30) montées dans le corps de dispositif (10), un module de pesage (40), un module de commande principal (50), un module d'identification d'informations d'utilisateur (80) configuré pour détecter des informations d'identification d'utilisateur saisies, un module d'alarme (61) et un appareil d'imagerie (70), le module de pesage (40) comprend une micro-unité de commande (41) et une unité de pesage (42) correspondant à chaque étagère (30), et le module de commande principal (50) est connecté à la micro-unité de commande (41) correspondant à chaque étagère (30) ; et
le procédé de distribution automatique comprend :
la réalisation d'une vérification d'identité personnelle d'un utilisateur à travers le module d'identification d'informations d'utilisateur ;
la commande du verrou pour déverrouiller la porte ;
après l'ouverture de la porte, la commande de l'appareil d'imagerie pour filmer une vidéo de l'utilisateur pendant que celui-ci achète des marchandises ;
l'acquisition d'informations de poids des marchandises sur chaque étagère (30) après la distribution automatique ;
la calcul d'un changement de poids des marchandises sur chaque étagère (30) avant et après la distribution automatique ;
la détermination d'informations de distribution automatique en fonction du changement de poids des marchandises sur chaque étagère (30) avant et après la distribution automatique ;
dans lequel l'une quelconque des une ou plusieurs étagères (30) est dotée d'un ou de plusieurs plateaux (31) et d'un ou de plusieurs capteurs de pesage (421) ; l'unité de pesage (42) correspondant à chaque étagère (30) comprend le même nombre des un ou plusieurs capteurs de pesage (421) que le nombre des un ou plusieurs plateaux (31), et les un ou plusieurs capteurs de pesage (421) sont agencés en correspondance avec les un ou plusieurs plateaux (31) et configurés pour acquérir respectivement le poids des marchandises sur les un ou plusieurs plateaux respectifs (31), dans lequel la détermination d'informations de distribution automatique en fonction du changement de poids des marchandises sur chaque étagère (30) avant et après la distribution automatique comprend :
la détermination d'un type et d'un poids unitaire des marchandises sur un plateau respectif (31) parmi les un ou plusieurs plateaux (31) selon un identifiant du plateau respectif (31) ;
la confirmation que le changement de poids des marchandises sur le plateau respectif (31) avant et après la distribution automatique est un multiple entier du poids unitaire des marchandises sur le plateau respectif (31), et le calcul du nombre des marchandises vendues sur le plateau respectif (31) en fonction du changement de poids et du poids unitaire ; et
l'émission d'une invite d'alarme lorsqu'il est confirmé qu'un quotient du changement de poids des marchandises sur le plateau respectif (31) avant et après la distribution automatique et le poids unitaire des marchandises sur le plateau respectif (31) est un nombre non entier indiquant que le changement de poids des marchandises sur le plateau respectif (31) avant et après la distribution automatique n'est pas un multiple entier du poids unitaire des marchandises sur le plateau respectif (31) ;
dans lequel l'invite d'alarme est émise pour signaler à l'utilisateur que la position des marchandises actuelles est incorrecte, facilitant ainsi l'utilisateur pour placer les marchandises à une position correcte puis effectuer le paiement, dans lequel, pendant ce temps, des informations d'alarme sont envoyées à un personnel en coulisses ; et
dans lequel, lorsque les informations d'alarme sont observées à travers un système d'arrière-plan, le personnel en coulisses peut appeler la vidéo acquise par l'appareil d'imagerie (7) pour confirmer, par le personnel en coulisses, si l'utilisateur a un mauvais comportement, comme endommager ou remplacer intentionnellement les marchandises.

6. Support de stockage non transitoire lisible par ordinateur, ayant un programme informatique stocké à l'intérieur qui, lorsqu'il est exécuté, entraîne la mise en œuvre d'un procédé de distribution automatique pour un dispositif de distribution automatique en libre-service (100) selon la revendication 5.
